(19) Europäisches Patentamt
European Patent Office
Office européen des brevets

(11) EP 3 330 318 B1

(12) # EUROPEAN PATENT SPECIFICATION

(45) Date of publication and mention of the grant of the patent:
**08.01.2020 Bulletin 2020/02**

(51) Int Cl.:
***C08L 69/00*** *(2006.01)* ***C08L 83/04*** *(2006.01)*
*C08K 3/38* *(2006.01)* *C08K 3/34* *(2006.01)*
*C08K 5/523* *(2006.01)*

(21) Application number: **17203865.5**

(22) Date of filing: **27.11.2017**

(54) **RESIN COMPOSITIONS AND ARTICLES MANUFACTURED USING THE SAME**

HARZZUSAMMENSETZUNGEN UND UNTER VERWENDUNG DAVON HERGESTELLTE ARTIKEL

COMPOSITIONS DE RÉSINE ET ARTICLES EN ÉTANT FABRIQUÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.12.2016 KR 20160164424**

(43) Date of publication of application:
**06.06.2018 Bulletin 2018/23**

(73) Proprietor: **Lotte Advanced Materials Co., Ltd.**
**Jeollanam-do 59616 (KR)**

(72) Inventor: **LEE, Jowon**
**16073 Uiwang-si, Gyeonggi-do (KR)**

(74) Representative: **Michalski Hüttermann & Partner**
**Patentanwälte mbB**
**Speditionstraße 21**
**40221 Düsseldorf (DE)**

(56) References cited:
**EP-A1- 0 520 186** **WO-A1-2015/189831**
**JP-B2- 3 613 910** **US-B1- 6 451 906**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 330 318 B1

## Description

### CROSS-REFERENCE TO RELATED APPLICATION

This application claims priority to and the benefit of Korean Patent Application No. 10-2016-0164424 filed in the Korean Intellectual Property Office on December 5, 2016.

### BACKGROUND OF THE INVENTION

#### (a) Technical Field

Resin compositions and articles manufactured using the same are disclosed.

#### (b) Description of the Related Art

A plastic material used for a transportation interior material requires high flame retardant performance for safety of passengers against a fire during the operation. Currently, the flame retardant performance of the plastic material may have a little difference in terms of requirement characteristics depending on fire safety standards of each country but commonly consist of low exothermicity, low smoke, low flame propagation velocity, and nontoxic smoke with a consideration to main requirement characteristics.

In particular, a resin used as the transportation interior material simultaneously requires physical characteristics, flame retardancy, and low smoke characteristics and mainly includes polyimide, polyaramid, and the like, for example, a polycarbonate resin has a couple of unsolved problem and thus is not actively applied for the interior material for transportation service.

In general, as for the polycarbonate resin, a flame retardant is applied thereto to improve flame retardancy, but when the flame retardant is excessively used to realize high flame retardancy, the polycarbonate resin has a problem of deteriorating impact characteristics and decreasing shear viscosity and thus may not be used as a transportation material.

In addition, a flame retardant polycarbonate (PC) resin or a flame retardant polycarbonate/acrylonitrile-butadiene-styrene (PC/ABS) resin prepared by applying a phosphorous-based, a metal salt-based, or metal hydrate, and the like as a flame retardant may not pass each reference of EN45545-2, currently effective European railroad fire safety standards.

U.S. Patent No. 8,691,902 relates to a resin composition including a polycarbonate resin, an inorganic reinforcing material, PTFE, and an anti-drip agent and satisfies NFP 92-505 and NFX 10-702 of American standards but does not reach a maximum exothermic reference according to a maximum average rate of heat emission (MARHE) by a cone calorimeter of EN45545-2. The low smoke characteristics of the resin may be improved by adding aluminum trioxide, magnesium dioxide, boehmite, and the like thereto, but when excessively used to realize high flame retardancy and flame propagation velocity, there is a problem of deteriorating elasticity and thus limiting its application.

### SUMMARY

An embodiment provides a resin composition that can have flame retardant, low-smoke, and low exothermic characteristics and also excellent mechanical properties.

Resin compositions are inter alia described in the WO 2015/189831, EP 520186, JP 3613910 and US 6451906.

Another embodiment provides an article including the thermoplastic resin composition.

In an embodiment according to present claim 1, a resin composition includes (A) a polycarbonate resin; (B) a branched polyorganosiloxane; (C) a borate-based inorganic compound; (D) a phosphorus-based flame retardant; and (E) talc.

The branched polyorganosiloxane may be represented by Chemical Formula 1.

[Chemical Formula 1]

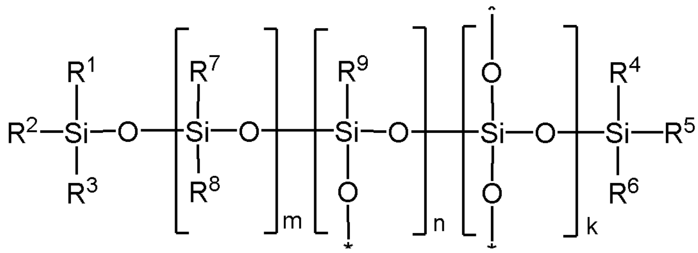

In Chemical Formula 1,

$R^1$ to $R^9$ are the same or different and are each independently hydrogen, a hydroxy group, a halogen, a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C6 to C30 aryl group, a substituted or unsubstituted C1 to C30 heteroaryl group, -OR, -(C=O)R (wherein, R is a hydroxy group, a substituted or unsubstituted C1 to C30 alkyl group, a substituted or unsubstituted C3 to C30 cycloalkyl group, a substituted or unsubstituted C6 to C30 aryl group, or a substituted or unsubstituted C7 to C30 arylalkyl group), or a combination thereof,
provided that at least one of $R^1$ to $R^6$ is a C1 to C6 alkoxy group, a hydroxy group, a halogen, or a carboxyl group,
m, n, and k are the same or different and are each independently an integer ranging from 0 to 1,000, and

$$m+n+k > 0.$$

The branched polyorganosiloxane may be an ultra-high molecular weight (UHMW) siloxane resin having a weight average molecular weight of greater than or equal to about 500,000 g/mol.

The branched polyorganosiloxane may be included in an amount of about 5 to 15 parts by weight based on 100 parts by weight of the polycarbonate resin.

The borate-based inorganic compound may be a zinc borate compound.

The borate-based inorganic compound may be one or more compound selected from 2ZnO·3B2O3, $ZnB_2O_4 \cdot 2H_2O$, $Zn_2B_4O_8 \cdot 3H_2O$, $Zn_2B_6O_{11} \cdot 7H_2O$, $Zn_2B_6O_{11} \cdot 9H_2O$, $Zn_3B_4O_9 \cdot 5H_2O$, $Zn[B_3O_3(OH)_5] \cdot H_2O$, $Zn_3(BO_3)_2$, $Zn_2B_6O_{11}$, $Zn_4B_2O7 \cdot H_2O$, $Zn_2B_6O_{11} \cdot 3.5H_2O$, and $ZnB_4O_7 \cdot 4H_2O$.

The borate-based inorganic compound may be included in an amount of about 5 to 15 parts by weight based on 100 parts by weight of the polycarbonate resin.

The polycarbonate resin may include about 10 to 90 wt% of a linear polycarbonate resin and about 90 to 10 wt% of a branched polycarbonate resin, each based on the total weight (100 wt%) of the polycarbonate resin..

The phosphorus-based flame retardant may be included in an amount of about 1 to 40 parts by weight and the talc retardant may be included in an amount of about 5 to 50 parts by weight based on 100 parts by weight of the polycarbonate resin.

In another embodiment, an article manufactured from the resin composition is provided.

The resin composition according to an embodiment has improved flame retardant, low-smoke, and low exothermic characteristics while having improved mechanical properties.

## DETAILED DESCRIPTION

Hereinafter, embodiments of the present invention are described in detail. However, these embodiments are exemplary, the present invention is not limited thereto and the present invention is defined by the scope of claims.

As used herein, when specific definition is not otherwise provided, "alkyl group" refers to a C1 to C20 alkyl group, "alkenyl group" refers to a C2 to C20 alkenyl group, "cycloalkenyl group" refers to a C3 to C20 cycloalkenyl group, "heterocycloalkenyl group" refers to a C3 to C20 heterocycloalkenyl group, "aryl group" refers to a C6 to C20 aryl group, "arylalkyl group" refers to a C6 to C20 arylalkyl group, "alkylene group" refers to a C1 to C20 alkylene group, "arylene group" refers to a C6 to C20 arylene group, "alkylarylene group" refers to a C6 to C20 alkylarylene group, "heteroarylene group" refers to a C3 to C20 heteroarylene group, and "alkoxylene group" refers to a C1 to C20 alkoxylene group.

As used herein, when specific definition is not otherwise provided, "substituted" refers to replacement of at least one hydrogen by a substituent of a halogen atom (F, Cl, Br, or I), a hydroxy group, a C1 to C20 alkoxy group, a nitro group, a cyano group, an amine group, an imino group, an azido group, an amidino group, a hydrazino group, a

hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, or a combination thereof.

As used herein, when specific definition is not otherwise provided, "hetero" refers to inclusion of at least one heteroatom of N, O, S and P in a Chemical Formula.

As used herein, when specific definition is not otherwise provided, "combination" refers to mixing or copolymerization.

As used herein, when specific definition is not otherwise provided, "*" indicates a point where the same or different atom or chemical formula is linked.

Hereinafter, a resin composition according to an embodiment is described.

A resin composition according to an embodiment of the present invention includes (A) a polycarbonate resin, (B) a branched polyorganosiloxane, (C) a borate-based inorganic compound, (D) a phosphorus-based flame retardant, and (E) talc.

In general, a polycarbonate resin may be used for an impact resistance article, and a polycarbonate resin having high viscosity may be used for extrusion. However, when the polycarbonate resin is used as a raw material for a transportation article, the resin may not be applied to a transportation (railroad cars, and the like) mold article due to low flame retardancy as well as high maximum average rate of heat emission and high smoke density during the combustion. When a metal hydroxide-based flame retardant is applied to the polycarbonate resin, the smoke density may be deteriorated, but the resin may be decomposed at a high temperature and thus not used for extrusion. In addition, a conventional polycarbonate resin has a low critical flux at extinguishment (CFE) and thus lacks of flame retardancy as a sheet.

However, the polycarbonate resin composition according to an embodiment includes branched polyorganosiloxane having an ultra-high molecular weight and thus realizes excellent low exothermicity as well as shows an effect of deteriorating a smoke amount and smoke density during the combustion.

In addition, the resin composition according to an embodiment exhibits flame retardancy synergic effect with the phosphorus-based flame retardant by including the borate-based inorganic compound, specifically a zinc borate compound.

Thereby, a resin composition having improved flame retardant, low-smoke, and low exothermic characteristics according to an embodiment may be provided and an article including the same has a fast flame propagation velocity as well as excellent low exothermic heat, low smoke and flame retardant characteristics, and thus may be applicable to transportation article materials such as railroad cars sheet.

Hereinafter, each component of the resin composition is described in more detail.

(A) Polycarbonate Resin

A polycarbonate resin (A) according to an embodiment may be a linear polycarbonate resin, a branched polycarbonate resin, or a mixture thereof. For example, the polycarbonate resin may include a linear polycarbonate resin and a branched polycarbonate resin.

For example, the linear polycarbonate resin may include resin prepared from a phenolic compound, for example, a dihydric phenolic compound and phosgene by a general preparation method in the presence of a molecular weight controlling agent and a catalyst. In addition, the linear polycarbonate resin may include resin prepared by ester exchange reaction of a phenolic compound, for example, a dihydric phenolic compound with a carbonate precursor, for example, diphenyl carbonate.

For example, the branched polycarbonate resin may be prepared by reacting a multi-functional aromatic compound such as trimellitic anhydride or trimellitic acid with a dihydric phenolic compound and a carbonate precursor, but is not limited thereto.

For example, the dihydric phenolic compound may include a bisphenol-based compound represented by Chemical Formula 2:

[Chemical Formula 2]

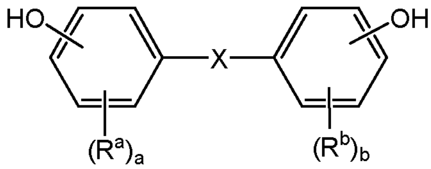

wherein, in Chemical Formula 2,

X is selected from a single bond, a substituted or unsubstituted C1 to C5 alkylene, a substituted or unsubstituted C1 to C5 alkylidene, a substituted or unsubstituted C3 to C6 cycloalkylene, a substituted or unsubstituted C5 to C6 cycloalkylidene, -CO, S, and $SO_2$,

$R^a$ and $R^b$ are the same or different and are each independently a substituted or unsubstituted C1 to C30 alkyl group or a substituted or unsubstituted C6 to C30 aryl group, and

a and b are the same or different and are each independently 0 to 4.

The polycarbonate resin may have a weight average molecular weight (Mw) of about 10,000 to about 200,000 g/mol, for example, about 15,000 to about 80,000 g/mol.

A polycarbonate resin according to an example embodiment may include about 10 wt% to about 90 wt% of the linear polycarbonate resin and about 90 wt% to about 10 wt% of the branched polycarbonate resin, for example, about 20 wt% to about 80 wt% of the linear polycarbonate resin and about 80 wt% to about 20 wt% of the branched polycarbonate resin, for example, about 30 wt% to about 70 wt% of the linear polycarbonate resin and about 70 wt% to about 30 wt% of the branched polycarbonate resin, each based on the total weight (100 wt%) of the polycarbonate resin.

In some embodiments, the polycarbonate resin may include the linear polycarbonate resin in an amount of about 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, or 90 wt%. Further, according to some embodiments, the amount of the linear polycarbonate resin may be in a range from about any of the foregoing amounts to about any other of the foregoing amounts.

In some embodiments, the polycarbonate resin may include the branched polycarbonate resin in an amount of about 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, or 90 wt%. Further, according to some embodiments, the amount of the branched polycarbonate resin may be in a range from about any of the foregoing amounts to about any other of the foregoing amounts.

(B) Branched Polyorganosiloxane

The resin composition according to an embodiment includes a branched polyorganosiloxane (B) in order to improve flame retardant, low-smoke, and low exothermic characteristics.

The resin composition including the branched polyorganosiloxane is dispersed in the polycarbonate resin and is transferred to a surface during combustion to form a barrier at the surface by a chemical reaction, to prevent heat and oxygen and thereby to endow flame retardancy. In addition, the branched polyorganosiloxane exhibits excellent low smoke characteristics compared with a linear siloxane resin. Thus, when a linear siloxane resin is used, a melt strength may be deteriorated and a hard char is not formed during combustion to deteriorate/decrease flame retardancy.

The branched polyorganosiloxane may be represented by Chemical Formula 1:

[Chemical Formula 1]

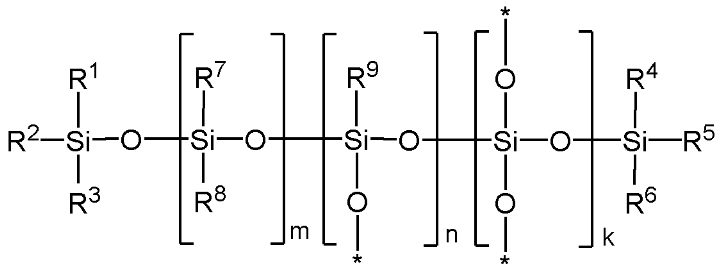

wherein, in Chemical Formula 1,

$R^1$ to $R^9$ are the same or different and are each independently hydrogen, a hydroxy group, a halogen, a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C6 to C30 aryl group, a substituted or unsubstituted C1 to C30 heteroaryl group, -OR, -(C=O)R (wherein, R is a hydroxy group, a substituted or unsubstituted C1 to C30 alkyl group, a substituted or unsubstituted C3 to C30 cycloalkyl group, a substituted or unsubstituted C6 to C30 aryl group, or a substituted or unsubstituted C7 to C30 arylalkyl group), or a combination thereof,
with the proviso that at least one of $R^1$ to $R^6$ is a C1 to C6 alkoxy group, a hydroxy group, a halogen, or a carboxyl group,
m, n, and k are the same or different and are each independently an integer ranging from 0 to 1,000, and
$m+n+k > 0$.

For example, $R^7$ to $R^9$ of Chemical Formula 1 may independently be hydrogen or a substituted or unsubstituted C1 to C30 alkyl group.

For example, $R^7$ to $R^9$ of Chemical Formula 1 may independently be a C1 to C10 alkyl group, for example, a C1 to C10 alkyl group, for example, a C1 to C4 alkyl group.

For example, all $R^7$ and $R^8$ of Chemical Formula 1 may be a methyl group.

For example, a siloxane resin in a form of a powder is added to the resin composition and thereby addition properties to the resin composition and internal polydispersity may be improved compared with a silicone rubber resin or a silicon gum.

In addition, the branched polyorganosiloxane is an ultra-high molecular weight (UHMW) siloxane resin and may have a weight average molecular weight of greater than or equal to about 500,000 g/mol, for example, greater than or equal to about 700,000 g/mol.

The resin composition may include the branched polyorganosiloxane in an amount of about 5 to 15 parts by weight, for example about 5 to about 13 parts by weight, and as another example, about 5 to about 10 parts by weight, based on 100 parts by weight of the polycarbonate resin.

In some embodiments, the resin composition may include the branched polyorganosiloxane in an amount of about 5, 6, 7, 8, 9, 10, 11, 12, 13, 14, or 15 parts by weight. Further, according to some embodiments, the amount of the branched polyorganosiloxane may be in a range from about any of the foregoing amounts to about any other of the foregoing amounts.

When the amount of the branched polyorganosiloxane is less than 5 parts by weight, low smoke characteristics may be deteriorated. When the amount of the branched polyorganosiloxane is greater than 15 parts by weight, a melt index becomes too high and thus flame retardancy of the resin composition may be deteriorated.

(C) Borate-based Inorganic Compound

The resin composition according to an embodiment includes a borate-based inorganic compound (C). The borate-based inorganic compound may be thermally decomposed during combustion and swelled by $H_2O$ to exist in a form of a molten product having a flame retardancy effect and increases flame retardancy of the resin composition by being used with the phosphorus-based flame retardant.

The borate-based inorganic compound may specifically be a borate-based compound including zinc, for example, one or more compound selected from 2ZnO·3B2O3, $ZnB_2O_4 \cdot 2H_2O$, $Zn_2B_4O_8 \cdot 3H_2O$, $Zn_2B_6O_{11} \cdot 7H_2O$, $Zn_2B_6O_{11} \cdot 9H_2O$, $Zn_3B_4O_9 \cdot 5H_2O$, $Zn[B_3O_3(OPH)_5] \cdot H_2O$ $Zn_3(BO_3)_2$, $Zn_2B_6O_{11}$, $Zn_4B_2O7 \cdot H_2O$, $Zn_2B_6O_{11} \cdot 3.5H_2O$, and $ZnB_4O_7 \cdot 4H_2O$, and the like. The borate-based inorganic compound, such as the borate-based compounds including zinc, may be used alone or in a mixture of two or more.

The resin composition may include the borate-based inorganic compound may be included in an amount of about 5 to 15 parts by weight, for example about 5 to about 13 parts by weight, and as another example about 5 to about 10 parts by weight, based on 100 parts by weight of the polycarbonate resin. In some embodiments, the resin composition may include the borate-based inorganic compound in an amount of about 5, 6, 7, 8, 9, 10, 11, 12, 13, 14, or 15 parts by weight. Further, according to some embodiments, the amount of the borate-based inorganic compound may be in a range from about any of the foregoing amounts to about any other of the foregoing amounts.

Including the borate-based inorganic compound in an amount within the above ranges may improve impact strength of the resin composition.

(D) Phosphorus-based Flame Retardant

The resin composition according to an embodiment includes a phosphorus-based flame retardant (D). The phosphorus-based flame retardant may be a generally-used phosphorus-based flame retardant in a flame retardant resin composition. For example, the phosphorus-based flame retardant may include a phosphate compound, a phsophonate compound, phosphinate compound, a phosphine oxide compound, a phosphazene compound, a metal salt thereof, and the like. The phosphorus-based flame retardant may be used alone or in a mixture of two or more.

For example, the phosphorus-based flame retardant may be a phosphoric acid ester compound represented by Chemical Formula 3 or a mixture thereof, but is not limited thereto.

[Chemical Formula 3]

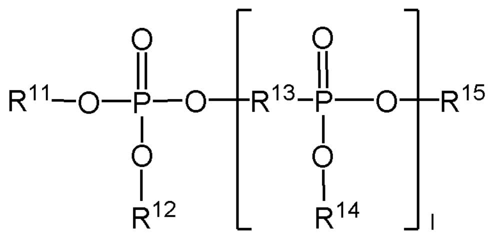

In Chemical Formula 3, $R^{11}$, $R^{12}$, $R^{14}$, and $R^{15}$ are independently hydrogen, a substituted or unsubstituted C6 to C20 aryl group, a substituted or unsubstituted C7 to C30 arylalkyl group, or a combination thereof,

$R^{13}$ is a substituted or unsubstituted C6 to C20 arylene group or a substituted or unsubstituted C7 to C30 arylalkyl group, and

I is an integer ranging from 0 to 4.

For example, the phosphoric acid ester compound represented by Chemical Formula 3 may be, when n is 0, diarylphosphate such as diphenylphosphate, triphenylphosphate, tricresyl phosphate, trixylenylphosphate, tri(2,6-dimethylphenyl)phosphate, tri(2,4,6-trimethylphenyl)phosphate, tri(2,4-ditertiarybutylphenyl)phosphate, tri(2,6-dimethylphenyl)phosphate, and the like, and when n is 1, bisphenol-A bis(diphenylphosphate), resorcinol bis(diphenylphosphate), resorcinol bis[bis (2,6-dimethylphenyl)phosphate], resorcinol bis[bis(2,4-ditertiarybutylphenyl)phosphate], hydroquinone bis[bis(2,6-dimethylphenyl)phosphate], hydroquinone bis[bis(2,4-ditertiarybutylphenyl)phosphate], but is not limited thereto. In addition, the phosphoric acid ester-based compound may be used alone or in a mixture of two or more.

The resin composition may include the phosphorus-based flame retardant may be included in an amount of about 1 to 40 parts by weight, for example about 1 to about 35 parts by weight, as another example about 3 to about 30 parts by weight, as another example about 5 to about 25 parts by weight, and as another example about 5 to 20 parts by weight, based on 100 parts by weight of the polycarbonate resin. In some embodiments, the resin composition may include the phosphorus-based flame retardant in an amount of about 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or 40 parts by weight. Further, according to some embodiments, the amount of the phosphorus-based flame retardant may be in a range from about any of the foregoing amounts to about any other of the foregoing amounts.

Including the phosphorus-based flame retardant in an amount within the above ranges may improve flame retardancy with minimal or no deterioration ot other properties of the resin composition.

(E) Talc

The resin composition according to an embodiment includes talc (E). The resin composition may improve heat

resistance and flame retardancy without deteriorating properties such as impact strength by including talc.

The talc may be a conventional, generally-used talc having a particle shape such as a sheet shape, a needle shape, and the like, and mixtures thereof.

The resin composition may include the talc may be included in an amount of about 5 to 50 parts by weight, for example about 10 to about 50 parts by weight, as another example about 10 to about 45 parts by weight, as another example about 10 to about 40 parts by weight, as another example about 10 to 35 parts by weight, and as another example about 15 to about 30 parts by weight, based on 100 parts by weight of the polycarbonate resin. In some embodiments, the resin composition may include the talc in an amount of about 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 parts by weight. Further, according to some embodiments, the amount of the talc may be in a range from about any of the foregoing amounts to about any other of the foregoing amounts. When the amount of the talc is less than about 5 parts by weight based on 100 parts by weight of the polycarbonate resin, flame retardancy may be deteriorated. When the amount of the talc is greater than about 50 parts by weight, impact resistance may be deteriorated.

The resin composition according to the present invention may further include one or more other additives such as but not limited to an antioxidant, an ultraviolet (UV) stabilizer, a fluorescent whitening agent, a release agent, a nucleating agent, a lubricant, an antistatic agent, a stabilizer, an auxiliary flame retardant, a reinforcing material, a colorant such as a pigment or dye, and the like, and mixtures thereof, in accordance with each use, in addition to the constituting components. For example, the other additives may be included in an amount of about 0.1 to 10 parts by weight based on 100 parts by weight of the polycarbonate, but are not limited thereto.

The resin composition may be prepared in a form of a pellet by mixing the constituting components and optionally one or more other additives simultaneously and then melt extruding the same in an extruder. The prepared pellet may be manufactured into various articles through various molding methods as known in the art, such as but not limited to injection molding, extrusion molding, vacuum molding, casting molding, and the like.

An article according to an embodiment includes the resin composition.

The article has improved an improvement of a flame propagation velocity and low exothermic and low smoke characteristics while maintaining high intrinsic mechanical properties of the polycarbonate resin and may be particularly applied to a transportation raw material.

Hereinafter, structures and functions of the disclosure are illustrated in more detail with reference to preferable examples. However, these examples, however, are not in any sense to be interpreted as limiting the scope of the disclosure.

**(Examples)**

The components used in Example 1 and Comparative Examples 1 to 9 are as follows:

(A) Polycarbonate Resin:
(A-1) Bisphenol A polycarbonate: Branch PC (Manufacturer: Sabic)
(A-2) Bisphenol A polycarbonate: linear PC (Manufacturer: Samsung SDI)
(B) branched polyorganosiloxane: SM9520G (Manufacturer: KCC)
(C) borate-based inorganic compound: Firebrake ZB (Manufacturer: Rio-tinto)
(D) phosphorus-based flame retardant: bisphenol A diphosphate (Manufacturer: Yoke)
(E) talc: Jetfine 3CA (Manufacturer: Imerys)
(F) PC/Si-gum master batch: MB50-315 (Manufacturer: Dow-corning)

**Example 1 and Comparative Examples 1 to 9**

The resin compositions of according to Example 1 and Comparative Examples 1 to 9, which were prepared according to each composition and content shown in Table 1, were respectively put in a twin screw type extruder having L/D = 44 and a diameter 45 mm and then, melt and extruded at 250 °C and a stirring speed of 200 rpm condition to manufacture pellets. The pellets were dried at 80 °C for greater than or equal to 5 hours and ejected through a screw type injector (150 ton single injector) at 240 °C to 280 °C to manufacture specimens.

[Table 1]

| | Ex. 1 | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 |
|---|---|---|---|---|---|---|---|---|---|---|
| A-1 (wt%) | 70 | 70 | 70 | 70 | 70 | 70 | 70 | 70 | 70 | 70 |

(continued)

| | Ex. 1 | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 |
|---|---|---|---|---|---|---|---|---|---|---|
| A-2 (wt%) | 30 | 30 | 30 | 30 | 30 | 30 | 30 | 30 | 30 | 30 |
| B (parts by weight) | 8 | - | - | - | - | - | - | - | - | 4 |
| C (parts by weight) | 8 | - | 2 | 4 | 8 | 8 | 8 | - | 8 | 8 |
| D (parts by weight) | 11 | - | 11 | 11 | 11 | - | 11 | 11 | 11 | 11 |
| E (parts by weight) | 23 | - | 23 | 23 | - | 23 | 23 | 23 | 23 | 23 |
| F (parts by weight) | - | - | 8 | 8 | 8 | 8 | - | 8 | 8 | - |
| (parts by weight: parts by weight based on 100 parts by weight of polycarbonate resins (A-1) and (A-2)) | | | | | | | | | | |

## Evaluation

The specimens according to Example 1 and Comparative Examples 1 to 9 were evaluated regarding properties in the following method, and the results are shown in Table 2.

(1) IZOD Impact strength: measured by making a notch in a 1/8"-thick Izod specimen in a method according to ASTM D256.
(2) Melt index: measured at 300 °C under a load of 1.2 kgf in an evaluation method according to ASTM D1238.
(3) Vicat softening temperature (VST): measured under a load of 5 kgf in an evaluation method according to ASTM D1525.
(4) Flame retardancy: measured by making each 1.5 mm and 0.8 mm-thick specimen according to a UL-94 VB flame retardancy reference.
(5) Maximum average rate of heat emission (MARHE): measured with a cone calorimeter (Fire Testing Technology (FTT) Ltd.) according to ISO 5660-1.
A maximum average rate of heat emission (MARHE) may be defined as a maximum value of an average rate of heat emission (ARHE) during combustion. Mathematically, the average rate of heat emission (ARHE) corresponds to an integral of a thermal emission speed curve.
(6) Ds(4): obtained by measuring an amount of smoke at any particular time, that is, four minutes according to ISO 5659-2.

$$Ds(4) = (V/A*L) \log(100/T)$$

(V: a volume of a testing chamber, A: an exposed area of a specimen, L: a length of light beam, T: relative transmittance (%) of light at 4 minutes)
(7) VOF4: obtained by measuring density of smoke generated at initial 4 minutes according to ISO 5659-2.

$$VOF4 = [(Ds(1) + Ds(2) + Ds(3) + Ds(4))/2] \times 1 \text{ min}$$

(8) Critical flux at extinguishment (CFE): measured according to ISO 5658-2.

The critical flux at extinguishment indicates a heat flux at a point where a flame spreads farthest from a center of combusting specimens and stops spreading.

[Table 2]

| | Ex. 1 | Comp. Ex.1 | Comp. Ex.2 | Comp. Ex.3 | Comp. Ex.4 | Comp. Ex.5 | Comp. Ex.6 | Comp. Ex.7 | Comp. Ex. 8. | Comp. Ex. 9 |
|---|---|---|---|---|---|---|---|---|---|---|
| Impact strength (kgfcm/cm) | 11.1 | 90 | 51.2 | 32.2 | 27.1 | 52.1 | 2.1 | 20.1 | 9.1 | 8.2 |
| Melt index (300° C/ 1.2 kgf) | 6.1 | 7 | 7.7 | 8.6 | 6.1 | 3.2 | 7.1 | 18.5 | 5.1 | 4.8 |
| VST (° C) | 104 | 145 | 106 | 105 | 106 | 142 | 105 | 106 | 105 | 106 |
| UL 94 1.5T | V-0 | V-2 | V-0 | V-0 | V-0 | V-1 | V-0 | V-1 | V-0 | V-0 |
| UL 94 0.8T | V-0 | V-2 | V-0 | V-0 | V-0 | V-1 | V-0 | V-1 | V-0 | V-0 |
| Maximum average rate of heat emission ($kW/m^2$) | 83.2 | 227.2 | 111.4 | 105.6 | 137.8 | 164.7 | 151.2 | 187.2 | 85.2 | 92.2 |
| Ds (4) | 167 | 721 | 110 | 98 | 398 | 429 | 378 | 381 | 190 | 212 |
| VOF4 | 470 | 925 | 201 | 187 | 680 | 704 | 714 | 689 | 530 | 580 |
| CFE ($kW/m^2$) | 24.2 | 8.8 | 16.8 | 18.2 | 11.1 | 13.1 | 15.1 | 11.1 | 23.1 | 20.1 |

Referring to Table 2, the resin composition of Example 1 showed excellent flame retardancy, impact resistance, flexibility, heat resistance, balance among these properties, and the like. In addition, the resin composition of Example 1 showed excellent low exothermicity and low smoke characteristics. Specifically, the present invention showed all appropriate maximum average rate of heat emission, Ds(4) and VOF4 about a smoke amount and smoke density during the fire, and critical flux at extinguishment (CFE) for Europe test reference, EN45545-2 regarding fire safety standards. For reference, "pass" may be obtained according to EN45545-2 as follows:

$$\text{MARHE} \leq 90\ kW/m^2,\ Ds(4) \leq 300,\ VOF4 \leq 600,\ CFE \geq 20\ kW/m^2$$

On the contrary, Comparative Examples 1, 6, and 7 including no branched polyorganosiloxane and/or borate-based inorganic compound unlike the Example 1 showed inferior low exothermicity and low smoke characteristics, and in particular, Comparative Examples 1 and 7 additionally showed inferior flame retardancy. In addition, among Comparative Examples 2 to 5 and 7, one including a linear Si-gum master batch having a similar molecular weight to that of the branched polyorganosiloxane instead of the borate-based inorganic compound but out of the content range of the borate-based inorganic compound according to the present invention exhibit a high maximum average rate of heat emission and a low heat flux (CFE).

The resin composition of Comparative Example 8 satisfis the requirements of EN45545-2 but exhibits insufficient low exothermicity and low smoke characteristics as well as insufficient physical characteristics such as impact strength, flexibility, and the like compared with the resin composition of Example 1. This effect difference is obtained, because the resin composition of Example 1 according to the present invention includes a branched siloxane resin which can prevent cracks in a char formed during the combustion due to improved melt strength. Accordingly, the present invention can exhibit excellent flame retardancy and low smoke characteristics due to an intumescent effect.

The present invention is not limited to the exemplary embodiment and may be embodied in various modifications, and it will be understood by a person of ordinary skill in the art to which the present invention pertains that the present invention may be carried out through other specific embodiments without modifying the technical idea or essential characteristics thereof. Therefore, the aforementioned embodiments should be understood to be exemplary but not limiting the present invention in any way.

## Claims

1. A resin composition, comprising

   (A) a polycarbonate resin;
   (B) a branched polyorganosiloxane;
   (C) a borate-based inorganic compound;
   (D) a phosphorus-based flame retardant; and
   (E) talc.

2. The resin composition of claim 1, wherein the branched polyorganosiloxane is represented by Chemical Formula 1:

[Chemical Formula 1]

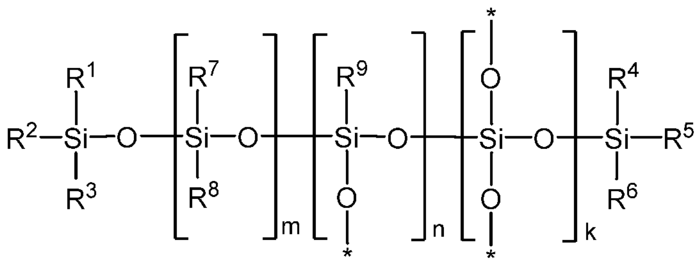

wherein, in Chemical Formula 1,

$R^1$ to $R^9$ are the same or different and are each independently hydrogen, a hydroxy group, a halogen, a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C6 to C30 aryl group, a substituted or unsubstituted C1 to C30 heteroaryl group, -OR, -(C=O)R , wherein, each R is independently a hydroxy group, a substituted or unsubstituted C1 to C30 alkyl group, a substituted or unsubstituted C3 to C30 cycloalkyl group, a substituted or unsubstituted C6 to C30 aryl group, or a substituted or unsubstituted C7 to C30 arylalkyl group, or a combination thereof,
provided that at least one of $R^1$ to $R^6$ is a C1 to C6 alkoxy group, a hydroxy group, a halogen, or a carboxyl group,
m, n, and k are the same or different and are each independently an integer ranging from 0 to 1,000, and

$$m+n+k > 0.$$

3. The resin composition of claims 1 or 2, comprising the branched polyorganosiloxane in an amount of 5 to 15 parts by weight based on 100 parts by weight of the polycarbonate resin.

4. The resin composition of claims 1 to 3, wherein the borate-based inorganic compound is a zinc borate compound.

5. The resin composition of claims 1 to 4, wherein the borate-based inorganic compound comprises one or more compounds selected from $2ZnO\cdot 3B2O3$, $ZnB_2O_4\cdot 2H_2O$, $Zn_2B_4O_8\cdot 3H_2O$, $Zn_2B_6O_{11}\cdot 7H_2O$, $Zn_2B_6O_{11}\cdot 9H_2O$, $Zn_3B_4O_9\cdot 5H_2O$, $Zn[B_3O_3(OH)_5]\cdot H_2O$, $Zn_3(BO_3)_2$, $Zn_2B_6O_{11}$, $Zn_4B_2O_7\cdot H_2O$, $Zn_2B_6O_{11}\cdot 3.5H_2O$, and $ZnB_4O_7\cdot 4H_2O$.

6. The resin composition of claims 1 to 5, comprising the borate-based inorganic compound is included in an amount of 5 to 15 parts by weight based on 100 parts by weight of the polycarbonate resin.

7. The resin composition of claims 1 to 6, wherein the polycarbonate resin includes 10 to 90 wt% of a linear polycarbonate resin and 90 to 10 wt% of a branched polycarbonate resin, each based on the total weight (100 wt%) of the polycarbonate resin..

8. The resin composition of claims 1 to 7, wherein the phosphorus-based flame retardant is included in an amount of 1 to 40 parts by weight and the talc is included in an amount of 5 to 50 parts by weight, each based on 100 parts by weight of the polycarbonate resin.

9. An article manufactured from the resin composition of any one of claim 1 to claim 8.

**Patentansprüche**

1. Harzzusammensetzung mit

(A) einem Polycarbonatharz;
(B) einem verzweigten Polyorganosiloxan;
(C) einer anorganischen Verbindung auf Boratbasis;
(D) einem Flammschutzmittel auf Phosphorbasis; und
(E) Talk.

2. Harzzusammensetzung nach Anspruch 1, wobei das verzweigte Polyorganosiloxan durch die chemische Formel 1 dargestellt ist:

[chemische Formel 1]

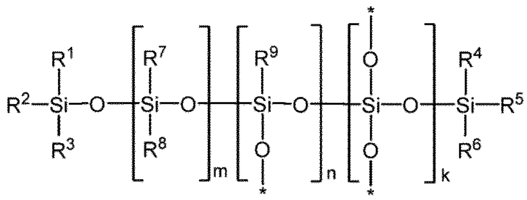

wobei in der chemischen Formel 1

$R^1$ bis $R^9$ gleich oder verschieden sind und unabhängig voneinander Wasserstoff, eine Hydroxygruppe, ein Halogen, eine substituierte oder unsubstituierte C1- bis C30-Alkylgruppe, eine substituierte oder unsubstituierte C2- bis C30-Alkenylgruppe, eine substituierte oder unsubstituierte C2- bis C30-Alkinylgruppe, eine substituierte oder unsubstituierte C3- bis C30-Cycloalkylgruppe, eine substituierte oder unsubstituierte C6- bis C30-Arylgruppe, eine substituierte oder unsubstituierte C1- bis C30-Heteroa-rylgruppe, -OR, -(C=O)R, wobei jedes R unabhängig eine Hydroxygruppe, eine substituierte oder unsubstituierte C1- bis C30-Alkylgruppe, eine substituierte oder unsubstituierte C3- bis C30-Alkylgruppe, eine substituierte oder unsubstituierte C3- bis C30-Cycloalkylgruppe, eine substituierte oder unsubstituierte C6- bis C30-Arylgruppe oder eine substituierte oder unsubstituierte C7- bis C30-Arylalkylgruppe oder eine Kombination davon ist,
mit der Maßgabe, dass mindestens eine der Komponenten $R^1$ bis $R^6$ eine C1- bis C6-Alkoxygruppe, eine Hydroxygruppe, ein Halogen oder eine Carboxylgruppe ist,
m, n und k gleich oder verschieden und jeweils unabhängig voneinander eine ganze Zahl im Bereich von 0 bis 1000 sind, und

$$m+n+k > 0$$

ist.

3. Harzzusammensetzung nach Anspruch 1 oder 2, die das verzweigte Polyorganosiloxan in einer Menge von 5 bis 15 Gewichtsteilen, bezogen auf 100 Gewichtsteilen des Polycarbonatharzes, enthält.

4. Harzzusammensetzung nach einem der Ansprüche 1 bis 3, wobei die anorganische Verbindung auf Boratbasis eine Zinkboratverbindung ist.

5. Harzzusammensetzung nach einem der Ansprüche 1 bis 4, wobei die anorganische Verbindung auf Boratbasis eine oder mehrere Verbindungen aufweist, die ausgewählt sind aus $2ZnO \cdot 3B_2O_3$, $ZnB_2O_4 \cdot 2H_20$, $Zn_2B_4O_8 \cdot 3H_2O$, $Zn_2B_6O_{11} \cdot 7H_2O$, $Zn_2B_6O_{11} \cdot 9H_2O$, $Zn_3B_4O_9 \cdot 5H_2O$, $Zn[B_3O_3(OH)_5] \cdot H_2O$, $Zn_3(BO_3)_2$, $Zn_2B_6O_{11}$, $Zn_4B_2O_7 \cdot H_2O$, $Zn_2B_6O_{11} \cdot 3{,}5H_2O$ und $ZnB_4O_7 \cdot 4H_2O$.

6. Harzzusammensetzung nach einem der Ansprüche 1 bis 5, wobei die anorganische Verbindung auf Boratbasis in einer Menge von 5 bis 15 Gewichtsteilen, bezogen auf 100 Gewichtsteilen des Polycarbonatharzes, enthalten ist.

7. Harzzusammensetzung nach einem der Ansprüche 1 bis 6, wobei das Polycarbonatharz 10 bis 90 Gew.-% eines linearen Polycarbonatharzes und 90 bis 10 Gew.-% eines verzweigten Polycarbonatharzes enthält, jeweils bezogen auf das Gesamtgewicht (100 Gew.-%) des Polycarbonatharzes.

8. Harzzusammensetzung nach einem der Ansprüche 1 bis 7, wobei das Flammschutzmittel auf Phosphorbasis in einer Menge von 1 bis 40 Gewichtsteilen enthalten ist und der Talk in einer Menge von 5 bis 50 Gewichtsteilen enthalten ist, jeweils bezogen auf 100 Gewichtsteilen des Polycarbonatharzes.

9. Artikel, hergestellt aus der Harzzusammensetzung nach einem der Ansprüche 1 bis 8.

## Revendications

1. Composition de résine thermoplastique, comprenant

(A) une résine polycarbonate ;
(B) un polyorganosiloxane branché ;
(C) un composé inorganique à base de borate ;
(D) un retardateur de flamme à base de phosphore ; et
(E) du talc.

2. Composition de résine thermoplastique selon la revendication 1, dans laquelle le polyorganosiloxane branché est représenté par la Formule Chimique 1 :

[Formule Chimique 1]

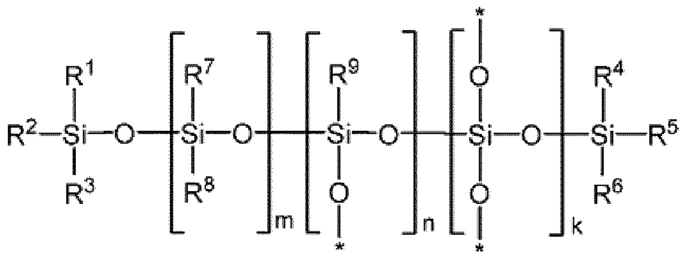

dans laquelle, dans la Formule Chimique 1,

$R^1$ à $R^9$ sont identiques ou différents et sont chacun indépendamment un hydrogène, un groupement hydroxy, un halogène, un groupement alkyle substitué ou non substitué en C1 à C30, un groupement alcényle substitué ou non substitué en C2 à C30, un groupement alcynyle substitué ou non substitué en C2 à C30, un groupement cycloalkyle substitué ou non substitué en C3 à C30, un groupement aryle substitué ou non substitué en C6 à C30, un groupement hétéroaryle substitué ou non substitué en C1 à C30, -OR, -(C=O)R, dans laquelle chaque R est indépendamment un groupement hydroxy, un groupement alkyle substitué ou non substitué en C1 à C30, un groupement cycloalkyle substitué ou non substitué en C3 à C30, un groupement aryle substitué ou non substitué en C6 à C30, ou un groupement arylakyle substitué ou non substitué en C7 à C30, ou une combinaisons de ceux-ci,
pourvu qu'au moins un de $R^1$ à $R^6$ soit un groupement alcoxy en C1 à C6, un groupement hydroxy, un halogène, ou un groupement carboxyle,
m, n, et k sont identiques ou différents et sont chacun indépendamment un entier compris entre 0 et 1000, et

$$m + n + k > 0.$$

3. Composition de résine selon les revendications 1 ou 2, comprenant le polyorganosiloxane branché dans une quantité

de 5 à 15 parties en poids sur la base de 100 parties en poids de la résine polycarbonate.

**4.** Composition de résine selon les revendications 1 à 3, dans laquelle le composé inorganique à base de borate est un composé de borate de zinc.

**5.** Composition de résine selon les revendications 1 à 4, dans laquelle le composé inorganique à base de borate comprend un ou plusieurs composés choisis parmi $2ZnO{\cdot}3B_2O_3$, $ZnB_2O_4{\cdot}2H_2O$, $Zn_2B_4O_8{\cdot}3H_2O$, $Zn_2B_6O_{11}{\cdot}7H_2O$, $Zn_2B_6O_{11}{\cdot}9H_2O$, $Zn_3B_4O_9{\cdot}5H_2O$, $Zn[B_3O_3(OH)_5]{\cdot}H_2O$, $Zn_3(BO_3)_2$, $Zn_2B_6O_{11}$, $Zn_4B_2O_7{\cdot}H_2O$, $Zn_2B_6O_{11}{\cdot}3{,}5H_2O$, et $ZnB_4O_7{\cdot}4H_2O$.

**6.** Composition de résine selon les revendications 1 à 5, comprenant le composé inorganique à base de borate inclus dans une quantité de 5 à 15 parties en poids sur la base de 100 parties en poids de la résine polycarbonate.

**7.** Composition de résine selon les revendications 1 à 6, dans laquelle la résine polycarbonate inclut de 10 à 90 % en poids d'une résine polycarbonate linéaire et de 90 à 10 % en poids d'une résine polycarbonate branchée, chacune étant basée sur le poids total (100 % en poids) de la résine polycarbonate.

**8.** Composition de résine selon les revendications 1 à 7, dans laquelle le retardateur de flamme à base de phosphore est inclus dans une quantité de 1 à 40 parties en poids et le talc est inclus dans une quantité de 5 à 50 parties en poids, chacune étant basée sur 100 parties en poids de la résine polycarbonate.

**9.** Article manufacturé à partir de la composition de résine selon l'une quelconque des revendications 1 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020160164424
- US 8691902 B
- WO 2015189831 A
- EP 520186 A
- JP 3613910 B
- US 6451906 B